# EUROPÄISCHE PATENTSCHRIFT

(11) **EP 2 209 581 B1**
(45) Veröffentlichungstag und Bekanntmachung des Hinweises auf die Patenterteilung: **17.04.2013**
(21) Anmeldenummer: 08785667.0
(22) Anmeldetag: 22.08.2008
(51) Int. Cl.: B23K 9/32, H02M 7/00

(54) **SCHALTMODUL FÜR DAS LEISTUNGSTEIL EINER SCHWEISSSTEUERUNG**
SWITCHING MODULE FOR THE POWER SECTION OF A WELDING CONTROL SYSTEM
MODULE DE COMMUTATION POUR LA PARTIE DE PUISSANCE D'UNE COMMANDE DE SOUDAGE

(30) Priorität: 11.10.2007 DE 102007048847
(43) Veröffentlichungstag der Anmeldung: 28.07.2010
(73) Patentinhaber: Robert Bosch GmbH, 70469 Stuttgart (DE)
(72) Erfinder: SCHAEFER, Günter, 69483 Wald-Michelbach (DE); SCHOLZ, Reinhard, 64711 Erbach (DE)
(74) Vertreter: Thürer, Andreas
(86) Internationale Anmeldenummer: PCT/EP2008/006904
(87) Internationale Veröffentlichungsnummer: WO 2009/049709

(56) Entgegenhaltungen:
- EP-A- 0 667 641
- DE-A1- 10 245 288
- FR-A- 2 123 067
- US-A1- 2006 044 762

## Beschreibung

Die Erfindung betrifft ein Schaltmodul für das Leistungsteil einer Schweißsteuerung, gemäß dem unabhängigen Anspruch 1 sowie ein Herstellverfahren für ein solches Modul nach Anspruch 10.

Im Zuge der Entwicklung neuer Schweißsteuerungen werden immer höhere Packungsdichten der leistungselektronischen Komponenten gefordert, um die Baugröße des Gerätes möglichst klein zu halten. Diese immer höheren Packungsdichten erfordern eine aktive Verlustleistungsabführung. Üblicherweise werden hierzu die Komponenten wärmeschlüssig auf Stranghohlprofile aufgeschraubt, die von einem Fluid, beispielsweise mittels einer in einem Kühlkreislauf geführten Kühlflüssigkeit, durchsetzt werden. Als Material für die Stranghohlprofile eignet sich beispielsweise Aluminium aufgrund seiner Eigenschaften, insbesondere seiner sehr guten Wärmeleitfähigkeit und Verarbeitbarkeit im Strangpressverfahren.

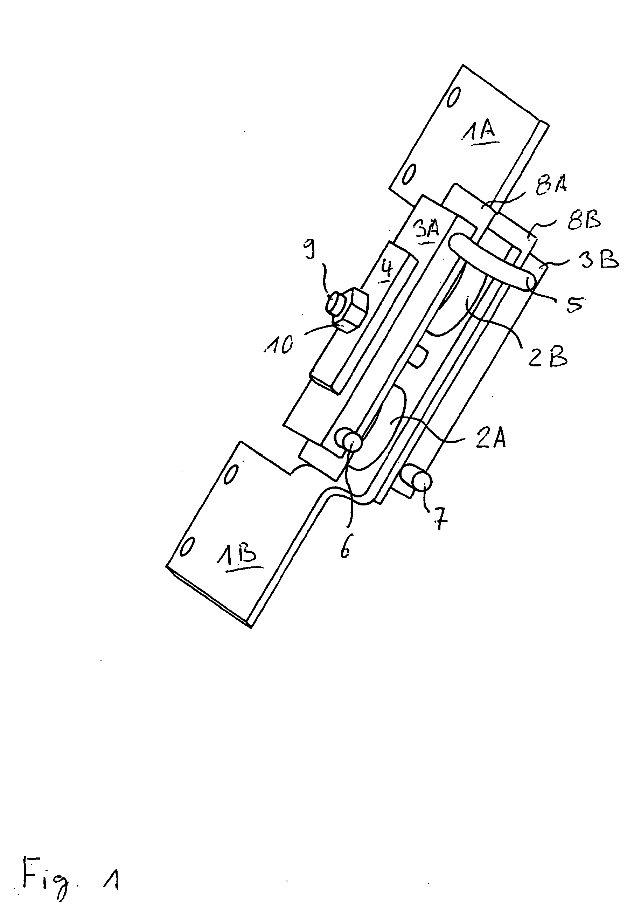

Die Offenlegungsschrift DE 102 45 288 A1 zeigt das Leistungsteil für einen Stromumrichter und ein Verfahren zur Herstellung desselben. Die Figur 1 dieser Offenlegungsschrift zeigt eine schematische Darstellung eines Schnitts durch das Umrichterleistungsteil. Dabei ist ein IGBT-Modul auf einem Kühlkörper montiert und auf demselben Kühlkörper sind auch Scheibenzellendioden angebracht. Der Kollektor des dargestellten IGBTs ist über eine großflächige niederinduktive Kupferschiene mit der Kathode der Scheibenzellendioden verbunden. Der Emitter des IGBTs ist über eine weitere großflächige niederinduktive Kupferschiene mit der Anode der Scheibenzellendiode verbunden. Im Bereich des IGBT-Moduls sind die beiden Kupferschienen mittels einer Isolationsschicht getrennt und elektrisch voneinander isoliert. Wie man in Figur 1 der genannten Offenlegungsschrift deutlich sieht, ist die stromführende Schiene unmittelbar auf dem Kühlkörper angeordnet. Figur 1 zeigt lediglich eine einseitige Kühlung der Scheibenzellendiode. Es wird in der Offenlegungsschrift auch darauf hingewiesen, dass ein zusätzlicher Kühlkörper von der Oberseite her angeordnet sein kann, um die Ausnutzung der Diode zu verbessern. Demgemäß wären dann die Stromzuführschienen zwischen zwei Kühlkörpern angeordnet.

Ähnliche Vorrichtungen sind auch in Verbindung mit dem Leistungsteil von Wechselstromsschweißsteuerungen bekannt. Hier sind in der Regel zwei Thyristor - Scheibenzellen zwischen zwei Kühlkörpern aus Aluminium angeordnet, wobei die Stromzuführung wiederum über die leitfähigen Aluminiumkühlkörper an die Thyristor-Scheibenzellen erfolgt. Dies hat zur Folge, dass die Kühlkörper gleichzeitig zur Stromleitung herangezogen werden und somit auch das Potenzial der Stromzuführschienen an diesen Kühlkörpern anliegt. Üblicherweise werden die Kühlkörper mittels Kühlschläuchen verbunden, so dass es möglich ist Kühlflüssigkeit zwischen den Kühlkörpern auszutauschen. Hierzu muss die Kühlflüssigkeit mittels einer ersten Kühlflüssigkeitszufuhr in einen ersten Kühlkörper einfließen und mittels der Verbindung vom ersten zum zweiten Kühlkörper weiterfließen. An einer Austrittsöffnung des zweiten Kühlkörpers tritt die Kühlflüssigkeit wieder aus. Die Verbindung zwischen den Kühlkörpern und der Zu- und Abfluss zum/vom Kühlkörper erfolgt im Stand der Technik mittels spezieller Schläuche. An diese Schläuche werden sehr hohe Anforderungen bezüglich der Spannungsfestigkeit gestellt, da sie eine Verbindung zwischen dem ersten und dem zweiten Kühlkörper herstellen müssen und die Kühlkörper sich auf unterschiedlichen elektrischen Potenzialen befinden. Außerdem werden diese Schläuche noch am Gehäuse der Schweißsteuerung befestigt und somit automatisch mit Erdpotenzial verbunden, weil dieses Gehäuse selbst geerdet ist. Für den Anschluss der Schläuche an ein Pumpsystem befinden sich am Gehäuse zusätzliche Schlauchanschlüsse.

Der Nachteil dieser Anordnung besteht darin, dass aufgrund der vorherrschenden Potenzialdifferenz zwischen den Kühlkörpern sowie zwischen den Kühlkörpern und den Schlauchanschlüssen am Gehäuse die Schläuche prinzipbedingt eine bestimmte Länge aufweisen müssen, damit die Spannungsfestigkeit zwischen den Potenzialen am Leistungsteil und dem Erdpotenzial stets gegeben ist. Diese von der Spannungsfestigkeit abhängig zu dimensionierende Schlauchlänge muss innerhalb des Kompaktsteuergehäuses räumlich untergebracht werden und erfordert dementsprechenden Platzbedarf. Außerdem sind teure Spezialschläuche erforderlich. Die aus dem Stand der Technik bekannte Anordnung führt daher zu einer weniger kompakten und in der Herstellung teueren Lösung, weil der Montageaufwand für die Schläuche sowie der hohe Preis für die Spezial-Schläuche anfällt.

Im nächstliegenden Stand der Technik US 2006/0044762 A1 wird ein Spannungswandler für ein Kraftfahrzeug offenbart, bei dem eine Hitzeleitungsschicht zwischen einer mit Schaltelementen bestückten Platine und einem Kühlkörper angeordnet ist. Die Platine dient zugleich als elektrische Isolierung des Kühlkörpers von den Schaltmitteln. Diese Lösung ist jedoch nicht ohne weiteres auf Schweißsteuerungsleistungsteile übertragbar, da bei Schaltmodulen von Leistungsteilen von Schweißsteuerungen die hier relevanten Schaltmittel, wie z.B. Scheibenzellendioden oder - thyristoren, nicht auf Platinen sitzen.

Die Aufgabe der Erfindung besteht darin eine Lösung zu finden, welche diese Nachteile weitestgehend vermeidet.

Erfindungsgemäß ist ein zweites Schaltmittel, ein zweites Kühlmittel und ein zweites Stromzuführmittel vorgesehen, wobei ein erster Anschluss der Schaltmittel am ersten Stromzuführmittel und ein zweiter Anschluss der Schaltmittel am zweiten Stromzuführmittel anliegt, wobei die Schaltmittel zwischen beiden Stromzuführmitteln antiparallel geschaltet angeordnet sind und wobei die Schaltmittel und Stromzuführmittel zwischen dem ersten und dem zweiten Kühlmittel angeordnet sind und wobei ein zweites Isolationsmittel auch zwischen zweitem Stromzuführmittel und zweitem Kühlmittel angeordnet ist.

Man erhält hierdurch einen sehr kompakten Aufbau, welcher die Schaltmittel, die in der Regel sehr hohe Ströme (kA) für z. B. Schweißzwecke schalten, von beiden Seiten effektiv kühlt und mit Strom versorgt.

Aufgrund dieser kompakten Bauweise kann das erfindungsgemäße Schaltmodul leicht und platzsparend im Gehäuse einer Schweißsteuerung untergebracht werden.

Besonders bevorzugt wird das Isolationsmittel mittels einer elektrisch isolierenden und thermisch leitenden Folie oder einer Platte realisiert. Vorzugsweise handelt es sich um thermoplastischen Kunststoff oder um aus synthetischen Polymeren gefertigte Isolationsmittel. Derartige Folien bzw. Platten können preisgünstig erworben werden und bei der Herstellung der Schaltmodule ohne großen Aufwand einfach zwischen Stromzuführmittel und Kühlmittel aufgelegt werden, so dass sie vollflächig beide Mittel voneinander isolieren.

Vorzugsweise ist das Isolationsmittel mittels eines Armierungsmittels zusätzlich verstärkt, beispielsweise einem Glasfasergewebe, welches in die Folie bzw. Platte eingearbeitet wurde. Dies verhindert, dass bei der Montage des Schaltmoduls möglicherweise auftretende Druck- oder Scherkräfte die Folie beschädigen.

Vorzugsweise sind die Schaltmittel, die Kühlmittel, die Stromzuführmittel und das Isolationsmittel zwischen zwei Spannmitteln eingespannt. Die Spannmittel können beispielsweise mittels zweier Spannfedern realisiert sein, wobei die Spannfedern beidseitig an den Kühlmitteln anliegen und mittels einer Gewindestange und beidseitig an die Gewindestange angeschraubten Muttern an die Kühlmittel angepresst werden. Diese äußeren Kräfte, welche mittels der Muttern und der Spannfedern auf die Kühlmittel wirken, führen dazu, dass alle Komponenten inklusive des Isolationsmittels fest aneinander gepresst werden, wodurch sich ein kompakter und stabiler Aufbau ergibt.

Besonders bevorzugt umfasst das Schaltmodul ein Verbindungsmittel, welches zwischen beiden Kühlmitteln anordenbar ist und den Austausch einer Kühlflüssigkeit zwischen beiden Kühlmitteln ermöglicht. Dem ersten Kühlmittel ist mittels eines Einganges das Fluid zuführbar und mittels des Verbindungsmittels kann das Fluid vom ersten zum zweiten Kühlmittel fließen und mittels eines Ausgangs am zweiten Kühlmittel kann das Fluid aus dem zweiten Kühlmittel wieder abfließen. Somit lässt sich eine Kühlmittelzirkulation realisieren, welche eine maximale Wärmeabfuhr direkt an der Wärmequelle gewährleistet.

Besonders bevorzugt handelt es sich bei dem Kühlmittel um ein Hohlprofil, beispielsweise aus Aluminium.

Bei den im Schaltmodul verbauten Schaltmitteln handelt es sich vorzugsweise um Leistungshalbleiter, insbesondere um Thyristor-Zellen in Form von Scheibenzellen, welche preiswert als Massenprodukt beziehbar sind.

Stattet man eine Schweißsteuerung mit in das Schweißsteuerungsgehäuse integriertem Leistungsteil aus, wobei das Leistungsteil ein erfindungsgemäßes Schaltmodul umfasst, dann kann diese Steuerung sehr kompakt und preiswert realisiert werden, weil weniger Zuleitungen für die Kühlung des Schaltmoduls aufgrund der erfindungsgemäßen Anbringung der Isolierung erforderlich werden.

Bei der Herstellung des erfindungsgemäßen Schaltmoduls für Leistungsteile einer Schweißvorrichtung wird in der Regel so verfahren, dass zunächst die Stromzuführmittel, also beispielsweise stromführende Schienen, an den Schaltmitteln, beispielsweise Thyristor-Zellen, angeordnet werden. Anschließend wird das Isolationsmittel, beispielsweise eine Isolationsfolie, auf die stromführenden Schienen aufgebracht, und dann werden die Kühlkörper auf das Isolationsmittel vollflächig aufgelegt und mittels der bereits erwähnten Spannfedern fixiert. Der Vorteil der sich aus dieser Anordnung ergibt wurde bereits zuvor erläutert.

Weitere vorteilhafte Ausgestaltungen, Merkmale und Details zur Erfindung erheben sich aus den abhängigen Ansprüchen, der Beschreibung des Ausführungsbeispiels und den Zeichnungen.

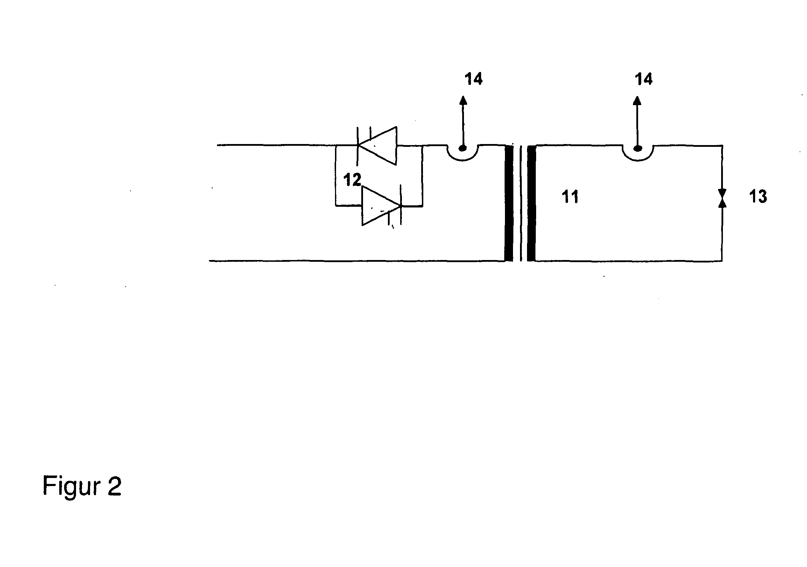

Die Erfindung soll nachfolgend anhand von Ausführungsbeispielen im Zusammenhang mit den Zeichnungen näher erläutert werden. Es sind jeweils nur die für das Verständnis der Erfindung wesentlichen Elemente dargestellt. Dabei zeigen Figur 1 eine perspektivische Darstellung des erfindungsgemäßen Schaltmoduls und Figur 2 schematisch die schaltungstechnische Einbindung des erfindungsgemäßen Schaltmoduls in eine AC-Widerstandsschweißanlage, wobei die Schweißsteuerung hier nicht gezeigt ist.

Figur 1 zeigt eine perspektivische Darstellung des Schaltmoduls mit zwei Thyristor-Zellen 2A und 2B, zwei Kühlmitteln 3A und 3B aus Aluminium, zwei Stromzuführmitteln bzw. stromführenden Schienen 1A und 1B, zwei Isolationsmitteln 8A, 8B in Form von isolierenden armierten Folien (glasfaserverstärkte Silikonfolie oder Folien mit der Markenbezeichnung Kapton), sowie eine Spannfeder 4 (zweite Spannfeder nicht gezeigt) und eine Gewindestange 9 mit Mutter 10 (zweite Mutter nicht gezeigt). Die Thyristor-Zellen 2A, 2B sind zentral angeordnet und zwischen den stromführenden Schienen 1A, 1B derart angebracht, dass sie mittels ihrer Anschlüsse vollflächig an den Schienen 1A, 1B anliegen. Auf den Schienen 1A, 1B ist jeweils beidseitig die glasfaserverstärkte Silikonfolie 8A, 8B derart angeordnet, dass der Kühlkörper 3A bzw. 3B vollflächig auf dieser Folie aufliegt und von der stromführenden Schiene 1A bzw. 1B elektrisch isoliert ist. Durch die Gesamtanordnung verläuft eine Bohrung, bzw. ein röhrenförmiger Kanal, welcher die Gewindestange 9 aufnehmen kann, so dass die Gesamtanordnung zwischen beidseitig angeordneten Spannfedern 4 mittels beidseitig auf die Gewindestange 9 aufgeschraubten Muttern 10 derart eingeklemmt wird, dass sowohl die elektrische Verbindung zwischen den Thyristor-Zellen 2A und 2B und den stromführenden Schienen 1A und 1B, als auch die Ableitung von Wärme mittels der Kühlkörper 3A und 3B, bestmöglich erfolgen kann.

Am Einlass 6 des ersten Kühlkörpers 3A kann ein Schlauch angeschlossen werden, welcher ein von einer Pumpe geführtes Kühlmittel in den Kühlkörper 3A zuführt. Mittels der Verbindung 5 zwischen dem ersten Kühlkörper 3A und dem zweiten Kühlkörper 3B kann das Kühlmittel aus dem Kühlkörper 3A zum Kühlkörper 3B fließen und mittels des Auslasses 7 des zweiten Kühlkörpers wieder zurück in den Pumpenkreislauf geführt werden.

Figur 2 zeigt das Prinzipschaltbild einer AC-Widerstandsschweißeinrichtung ausschnittsweise, insbesondere hier den Schweißtransformator 11, welcher primärseitig mittels des erfindungsgemäßen Schaltmoduls 12 steuerbar ist, so dass die sekundärseitig angeordnete Schweißanordnung 11, beispielsweise die Schweißzange einer Widerstandsschweißanlage, mit Schweißstrom beaufschlagbar ist. Zusätzlich gezeigt sind zwei Strommesspunkte 14, die die Änderung des Schweißstroms primärseitig und sekundärseitig erfassen und zu einer Schweißsteuerung 14 weiterleiten können.

Die Thyristoren 2A, 2B der erfindungsgemäßen Schaltvorrichtung werden zur Schweißstromsteuerung in der Betriebart "Stromsteuerung" bei einem fest vorgebbaren Phasenanschnittswert gezündet. In der Betriebsart "Stromregelung" wird zusätzlich der in der Vergangenheit aufgetretene Strom zur Berechnung des neuen Phasenanschnittwertes von der Schweißsteuerung mit herangezogen.

## Patentansprüche

1. Schaltmodul für das Leistungsteil einer Schweißsteuerung mit Schaltmittel (2A), Kühlmittel (3A) aus elektrisch leitfähigem Material und Stromzuführmittel (1A), wobei das Stromzuführmittel (1A) am Schaltmittel (2A) anliegt und das Kühlmittel (3A) zur Kühlung des Schaltmittels (2A) am Stromzuführmittel (1A) anliegt, und zwischen Kühlmittel (3A) und Stromzuführmittel (1A) ein Isolationsmittel (8A) derart angeordnet ist, dass das Kühlmittel (3A) vom Stromzuführmittel (1A) elektrisch isoliert ist
**dadurch gekennzeichnet, dass** ein zweites Schaltmittel (2B), ein zweites Kühlmittel (3B), ein zweites Stromzuführmittel (1B) und ein zweites Isolationsmittel (8B) vorgesehen sind, wobei ein erster Anschluss der Schaltmittel (2A,2B) am ersten Stromzuführmittel (1A) und ein zweiter Anschluss der Schaltmittel (2A,2B) am zweiten Stromzuführmittel (1B) anliegt, so dass beide Schaltmittel (2A,2B) antiparallel geschaltet sind, wobei die Schaltmittel (2A,2B) zwischen beiden Stromzuführmitteln (1A,1B) angeordnet sind und wobei am zweiten Stromzuführmittel (1B) ebenfalls das zweite Isolationsmittel (8B) anliegt und wobei auf diesem zweiten Isolationsmittel (8B) das zweite Kühlmittel (3B) angeordnet ist.

2. Schaltmodul nach Anspruch 1, wobei das Isolationsmittel (8A,8B) eine Folie oder eine Platte mit elektrisch isolierenden und thermisch leitenden Eigenschaften ist, vorzugsweise aus thermoplastischem Kunststoff oder aus synthetischen Polymeren.

3. Schaltmodul nach einem der vorhergehenden Ansprüche, wobei das Isolationsmittel (8A,8B) ein Armierungsmittel umfasst.

4. Schaltmodul nach einem der vorhergehenden Ansprüche, wobei die Schaltmittel (2A,2B), Kühlmittel (3A,3B), Stromzuführmittel (1A,1B) und Isolationsmittel (8A,8B) zwischen zwei Spannmitteln angeordnet sind.

5. Schaltmodul nach einem der vorhergehenden Ansprüche, wobei das erste (3A) und zweite (3B) Kühlmittel mittels eines Verbindungsmittels (5) zum Kühlfluidaustausch untereinander verbunden sind, wobei das erste Kühlmittel (3A) zusätzlich einen Fluideingang (6) und das zweite Kühlmittel (3B) eine zusätzlich Fluidausgang (7) umfasst.

6. Schaltmodul nach einem der vorhergehenden Ansprüche, wobei das Kühlmittel (3A,3B) ein Hohlprofil zur Speicherung und Weiterleitung einer Kühlflüssigkeit ist, insbesondere aus Aluminium.

7. Schaltmodul nach einem der vorhergehenden Ansprüche, wobei es sich bei den Schaltmitteln (1A,1B) um Leistungshalbleiter, insbesondere um Thyristor-Zellen handelt.

8. Schweißsteuerung mit in das Schweißsteuerungsgehäuse integriertem Leistungsteil, wobei das Leistungsteil ein Schaltmodul nach einem der vorhergehenden Ansprüche umfasst.

9. Schweißvorrichtung mit Schweißtransformator und Schweißsteuerung nach Anspruch 8, wobei das erste und zweite Stromzuführungsmittel (1A,1B) des Leistungsteils zwischen dem Schweißsteuerteil und dem Primärteil des Schweißtransformators angeordnet ist dass der Schweißstrom mittels des Schaltmoduls steuerbar oder regelbar ist.

10. Verfahren zur Herstellung eines Schaltmoduls für das Leistungsteil einer Schweißsteuerung mit Schaltmittel (2A), Kühlmittel (3A) aus elektrisch leitfähigem Material und Stromzuführmittel (1A), wobei das Stromzuführmittel (1A) am Schaltmittel (2A) angeordnet wird und das Kühlmittel (3A) zur Kühlung des Schaltmittels (2A) am Stromzuführmittel (1A) angeordnet wird, wobei zwischen Kühlmittel (3A) und Stromzuführmittel (1A) ein Isolationsmittel (8A) derart eingebracht wird, dass das Kühlmittel (3A) vom Stromzuführmittel (1A) elektrisch isoliert ist, wobei ein zweites Schaltmittel (2B), ein zweites Kühlmittel (3B), ein zweites Stromzuführmittel (1B) und ein zweites Isolationsmittel (8B) vorgesehen werden, wobei ein erster Anschluss der Schaltmittel (2A,2B) am ersten Stromzuführmittel (1A) und ein zweiter Anschluss der Schaltmittel (2A,2B) am zweiten Stromzuführmittel (1B) angeordnet werden, so dass beide Schaltmittel (2A,2B) antiparallel geschaltet sind, wobei die Schaltmittel (2A,2B) zwischen beiden Stromzuführmitteln (1A,1B) angeordnet werden und wobei am zweiten Stromzuführmittel (1B) ebenfalls das zweite Isolationsmittel (8B) eingebracht wird und wobei auf diesem zweiten Isolationsmittel (8B) ebenfalls ein zweites Kühlmittel (3B) angeordnet wird..

## Claims

1. Switching module for the power section of a welding control system, having switching means (2A), cooling means (3A) which are composed of electrically conductive material, and current supply means (1A), wherein the current supply means (1A) rest against the switching means (2A) and the cooling means (3A) for cooling the switching means (2A) rest against the current supply means (1A), and an insulation means (8A) is arranged between the cooling means (3A) and the current supply means (1A) in such a way that the cooling means (3A) is electrically insulated from the current supply means (1A),
**characterized in that** a second switching means (2B), a second cooling means (3B), a second current supply means (1B) and a second insulation means (8B) are provided, wherein a first connection of the switching means (2A, 2B) rests against the first current supply means (1A) and a second connection of the switching means (2A, 2B) rests against the second current supply means (1B), and therefore the two switching means (2A, 2B) are connected back-to-back in parallel, wherein the switching means (2A, 2B) are arranged between the two current supply means (1A, 1B), and wherein the second insulation means (8B) likewise rests against the second current supply means (1B), and wherein the second cooling means (3B) is arranged on this second insulation means (8B).

2. Switching module according to Claim 1, wherein the insulation means (8A, 8B) is a film or a plate with electrically insulating and thermally conductive properties, preferably composed of a thermoplastic or synthetic polymers.

3. Switching module according to either of the preceding claims, wherein the insulation means (8A, 8B) comprises a reinforcement means.

4. Switching module according to one of the preceding claims, wherein the switching means (2A, 2B), cooling means (3A, 3B), current supply means (1A, 1B) and insulation means (8A, 8B) are arranged between two clamping means.

5. Switching module according to one of the preceding claims, wherein the first (3A) and second (3B) cooling means are connected to one another by means of a connecting means (5) for exchanging cooling fluid, wherein the first cooling means (3A) additionally comprises a fluid inlet (6), and the second cooling means (3B) additionally comprises a fluid outlet (7).

6. Switching module according to one of the preceding claims, wherein the cooling means (3A, 3B) is a hollow profile for storing and transferring a cooling liquid, in particular composed of aluminium.

7. Switching module according to one of the preceding claims, wherein the switching means (1A, 1B) are power semiconductors, in particular thyristor cells.

8. Welding control system having a power section which is integrated in the welding control system housing, wherein the power section comprises a switching module according to one of the preceding claims.

9. Welding apparatus having a welding transformer and a welding control system according to Claim 8, wherein the first and second current supply means (1A, 1B) of the power section are arranged between the welding control section and the primary section of the welding transformer such that the welding current can be subjected to open-loop control or closed-loop control by means of the switching module.

10. Method for producing a switching module for the power section of a welding control system having switching means (2A), cooling means (3A) which are composed of electrically conductive material, and current supply means (1A), wherein the current supply means (1A) is arranged against the switching means (2A) and the cooling means (3A) for cooling the switching means (2A) is arranged against the current supply means (1A), wherein an insulation means (8A) is introduced between the cooling means (3A) and the current supply means (1A) in such a way that the cooling means (3A) is electrically insulated from the current supply means (1A), wherein a second switching means (2B), a second cooling means (3B), a second current supply means (1B) and a second insulation means (8B) are provided, wherein a first connection of the switching means (2A, 2B) is arranged against the first current supply means (1A) and a second connection of the switching means (2A, 2B) is arranged against the second current supply means (1B), and therefore the two switching means (2A, 2B) are connected back-to-back in parallel, wherein the switching means (2A, 2B) are arranged between the two current supply means (1A, 1B), and wherein the second insulation means (8B) is likewise arranged on the second current supply means (1B), and wherein a second cooling means (3B) is likewise arranged on this second insulation means (8B).

## Revendications

1. Module de commutation pour la partie de puissance d'une commande de soudage, le module présentant un moyen de commutation (2A), un moyen de refroidissement (3A) en matériau électriquement conducteur et un moyen (1A) d'apport de courant,
le moyen (1A) d'apport de courant étant raccordé au moyen de commutation (2A) et le moyen de refroidissement (3A) étant raccordé au moyen (1A) d'apport de courant pour refroidir le moyen de commutation (2A), et
un moyen d'isolation (8A) étant disposé entre le moyen de refroidissement (3A) et le moyen (1A) d'apport de courant de telle sorte que le moyen de refroidissement (3A) soit isolé électriquement du moyen (1A) d'apport de courant,
**caractérisé en ce que**
un deuxième moyen de commutation (2B), un deuxième moyen de refroidissement (3B), un deuxième moyen (1B) d'apport de courant et un deuxième moyen d'isolation (8B) sont prévus,
**en ce qu'**une première borne de raccordement des moyens de commutation (2A, 2B) est raccordée au premier moyen (1A) d'apport de courant et une deuxième borne des moyens de commutation (2A, 2B) au deuxième moyen (1B) d'apport de courant de telle sorte que les deux moyens de commutation (2A, 2B) soient raccordés de manière antiparallèle,
**en ce que** les moyens de commutation (2A, 2B) sont disposés entre les deux moyens (1A, 1B) d'apport de courant et **en ce que** le deuxième moyen d'isolation (8B) est également disposé sur le deuxième moyen (1B) d'apport de courant, le deuxième moyen de refroidissement (3B) étant disposé sur ce deuxième moyen d'isolation (8B).

2. Module de commutation selon la revendication 1, dans lequel les moyens d'isolation (8A, 8B) sont une feuille ou une plaque présentant des propriétés d'isolation thermique et de conductivité thermique, de préférence en matière synthétique thermoplastique ou en polymères synthétiques.

3. Module de commutation selon l'une des revendications précédentes, dans lequel le moyen d'isolation (8A, 8B) comporte un moyen d'armature.

4. Module de commutation selon l'une des revendications précédentes, dans lequel les moyens de commutation (2A, 2B), les moyens de refroidissement (3A, 3B), les moyens (1A, 1B) d'apport de courant et les moyens d'isolation (8A, 8B) sont disposés entre deux moyens de serrage.

5. Module de commutation selon l'une des revendications précédentes, dans lequel le premier moyen de refroidissement (3A) et le deuxième moyen de refroidissement (3B) sont reliés l'un à l'autre au moyen d'un moyen de liaison (5) de manière à échanger du fluide de refroidissement, le premier moyen de refroidissement (3A) présentant de plus une entrée (6) de fluide et le deuxième moyen de refroidissement (3B) présentant de plus une sortie (7) de fluide.

6. Module de commutation selon l'une des revendications précédentes, dans lequel les moyens de refroidissement (3A, 3B) sont des profilés creux, en particulier en aluminium, permettant de conserver et de transporter un liquide de refroidissement.

7. Module de commutation selon l'une des revendications précédentes, dans lequel les moyens de commutation (1A, 1B) sont des semi-conducteurs de puissance et en particulier des cellules à thyristor.

8. Commande de soudage présentant une partie de puissance intégrée dans le boîtier de la commande de soudage, et dans laquelle la partie de puissance comporte un module de commutation selon l'une des revendications précédentes.

9. Ensemble de soudage doté d'un transformateur de soudage et d'une commande de soudage selon la revendication 8, dans lequel le premier et le deuxième moyen (1A, 1B) d'apport de courant de la partie de puissance sont disposés entre la partie de commande de soudage et la partie primaire du transformateur de soudage et en ce que le courant de soudage peut être commandé ou régulé au moyen du module de commutation.

10. Procédé de fabrication d'un module de commutation pour la partie de puissance d'une commande de soudage, le module présentant un moyen de commutation (2A), un moyen de refroidissement (3A) en matériau électriquement conducteur et un moyen (1A) d'apport de courant,
le moyen (1A) d'apport de courant étant disposé sur le moyen de commutation (2A) et le moyen de refroidissement (3A) étant disposé sur le moyen (1A) d'apport de courant pour refroidir le moyen de commutation (2A),
un moyen d'isolation (8A) étant disposé entre le moyen de refroidissement (3A) et le moyen (1A) d'apport de courant de telle sorte que le moyen de refroidissement (3A) soit isolé électriquement du moyen (1A) d'apport de courant,
un deuxième moyen de commutation (2B), un deuxième moyen de refroidissement (3B), un deuxième moyen (1B) d'apport de courant et un deuxième moyen d'isolation (8B) étant prévus,
une première borne de raccordement des moyens de commutation (2A, 2B) étant raccordée au premier moyen (1A) d'apport de courant et une deuxième borne des moyens de commutation (2A, 2B) au deuxième moyen (1B) d'apport de courant de telle sorte que les deux moyens de commutation (2A, 2B) soient raccordés de manière antiparallèle,
les moyens de commutation (2A, 2B) étant disposés entre les deux moyens (1A, 1B) d'apport de courant et le deuxième moyen d'isolation (8B) étant également disposé sur le deuxième moyen (1B) d'apport de courant, et un deuxième moyen de refroidissement (3B) étant également disposé sur ce deuxième moyen d'isolation (8B).
